# EUROPEAN PATENT APPLICATION

(11) **EP 4 480 912 A1**
(43) Date of publication of application: **25.12.2024**
(21) Application number: 23752981.3
(22) Date of filing: 14.02.2023
(51) Int. Cl.: C01B 32/318, D01F 9/16, D01F 9/17

(54) **COMPOSITION FOR PRODUCING ACTIVATED CARBON, METHOD FOR PRODUCING SAME, MOLDED BODY FOR PRODUCING ACTIVATED CARBON, METHOD FOR PRODUCING SAME, FIBERS FOR PRODUCING ACTIVATED CARBON FIBERS, METHOD FOR PRODUCING SAME, ACTIVATED CARBON PRECURSOR, ACTIVATED CARBON FIBER PRECURSOR, CARBIDE, CARBON FIBERS, ACTIVATED CARBON, METHOD FOR PRODUCING SAME, ACTIVATED CARBON FIBERS, AND METHOD FOR PRODUCING SAME**

(30) Priority: 14.02.2022 JP 2022020649; 13.02.2023 JP 2023020122
(71) Applicant: Idemitsu Kosan Co.,Ltd., Tokyo 100-8321 (JP)
(72) Inventor: YAMASHITA, Shuhei, Takasaki-shi, Gunma 370-0032 (JP); YAMADA, Kazuhiro, Takasaki-shi, Gunma 370-0032 (JP); KOYAMA, Yoshihito, Tokyo 100-8321 (JP); TOI, Hiroyuki, Tokyo 100-8321 (JP)
(74) Representative: Hoffmann Eitle
(86) International application number: PCT/JP2023/004961
(87) International publication number: WO 2023/153519

(57) **Abstract**

A composition for producing activated carbon, containing a phenol resin and lignin having a softening point of 100°C to 175°C. A molded product for producing activated carbon, formed of the composition for producing activated carbon. Fiber for producing activated carbon fiber, formed of the composition for producing activated carbon. An activated carbon precursor formed of a cured product of the composition for producing activated carbon. An activated carbon fiber precursor formed of a cured product of the composition for producing activated carbon. A carbide obtained by carbonizing the activated carbon precursor. Carbon fiber obtained by carbonizing the activated carbon fiber precursor. Activated carbon obtained by activating the carbide. Activated carbon fiber obtained by activating the carbon fiber.

## Description

### Technical Field

The present invention relates to a composition for producing activated carbon, a method for producing the composition for producing activated carbon, a molded product for producing activated carbon, a method for producing the molded product for producing activated carbon, fiber for producing activated carbon fiber, a method for producing the fiber for producing activated carbon fiber, an activated carbon precursor, an activated carbon fiber precursor, a carbide, carbon fiber, activated carbon, a method for producing the activated carbon, activated carbon fiber, and a method for producing the activated carbon fiber.

The present application claims priority on Japanese Patent Application, Tokugan, No. 2022-020649 filed in Japan on February 14, 2022 and Japanese Patent Application, Tokugan, No. 2023-020122 filed in Japan on February 13, 2023, the contents of the specifications of which are hereby incorporated by reference.

### Background Art

Activated carbon is a substance in which a large number of pores are formed and which has a large specific surface area. With such characteristics used, activated carbon is suitably used for, for example, an adsorbing material and an electrode for an electric double layer capacitor. Activated carbon is ordinarily produced by a method of carbonizing and activating an activated carbon precursor. Activation is a process for forming pores of activated carbon, and is ordinarily carried out by a method of reaction with a specific gas and/or a specific chemical under a high temperature condition. Activation is sometimes referred to as making something active.

Conventionally, as an activated carbon precursor, coconut shell, sawdust, wood, coal pitch, petroleum pitch, or the like is mainly used in the case of powdered activated carbon, and pitch-based fiber, acrylic fiber, phenol resin-based fiber, rayon fiber, or the like is mainly used in the case of fibrous activated carbon, which is so-called activated carbon fiber.

Further, using lignin as an activated carbon precursor has also been considered.

Patent Literature 1 discloses a method in which lignin having a hydrophilic group is prepared, precursor fiber is formed from the lignin, the precursor fiber is rendered infusible by an acid treatment and carbonized to form carbon fiber, and the carbon fiber is activated.

Patent Literature 2 discloses a method in which metallic elements having hydrogenation activity are dispersed to carbon fiber such as lignin-poval-based carbon fiber, and the carbon fiber in which the metallic elements have been dispersed is heat-treated in a reducing atmosphere.

Patent Literature 3 discloses a method in which a wood residue pellet that is derived from a process for producing bioethanol by using wood-based biomass as a raw material and that contains lignin is carbonized and heated under a specific atmosphere so as to be activated.

### Citation List

### [Patent Literature]

[Patent Literature 1]
   Japanese Patent Application Publication Tokukai No. 2013-147768
[Patent Literature 2]
   Japanese Patent Application Publication Tokukaihei No. 11-269763
[Patent Literature 3]
   Japanese Patent Application Publication Tokukai No. 2010-207693

### Summary of Invention

### Technical Problem

However, activated carbon obtained by each of the methods disclosed in Patent Literatures 1 to 3 is inferior in performance because the activated carbon has an insufficient mesopore volume. For example, in activated carbon fiber obtained by the method of Patent Literature 1, a micropore volume accounts for not less than 75% of a total pore volume, and a large-sized molecule has insufficient adsorbability.

Further, the method of Patent Literature 2 requires a heavy metal element. Thus, the heavy metal element remains in resulting activated carbon fiber. Such activated carbon fiber cannot be used for some applications.

Furthermore, the method of Patent Literature 3 is inferior in moldability because the wood residue, which is a precursor, does not melt. This makes molding into a shape (e.g., a fibrous shape) other than a pellet shape difficult. Even if a molded product having a shape other than a pellet shape is successfully obtained, the shape of the molded product may be deformed during carbonization and activation due to an insufficient strength and/or insufficient toughness of the precursor.

The present invention has an object to provide a composition for producing activated carbon, from which composition activated carbon having a high specific surface area and a high mesopore volume can be obtained by carbonization and activation and which composition has excellent moldability, a method for producing the composition for producing activated carbon, a molded product for producing activated carbon in which molded product the composition for producing activated carbon is used, a method for producing the molded product for producing activated carbon, fiber for producing activated carbon fiber, a method for producing the fiber for producing activated carbon fiber, an activated carbon precursor, a carbide of the activated carbon precursor, an activated carbon fiber precursor, carbon fiber, activated carbon, a method for producing the activated carbon, activated carbon fiber, and a method for producing the activated carbon fiber.

### Solution to Problem

The present invention has the following aspects.
<1> A composition for producing activated carbon, containing a phenol resin and lignin having a softening point of 100°C to 175°C.
<2> The composition for producing activated carbon described above in <1>, wherein the lignin has an ash content of 0.1% by mass to 2.0% by mass.
<3> The composition for producing activated carbon described above in <1> or <2>, wherein the phenol resin is a novolac-type phenol resin.
<4> The composition for producing activated carbon described above in any one of < 1> to <3>, wherein a ratio of the lignin to a total mass of the lignin and the phenol resin is 5% by mass to 90% by mass.
<5> A method for producing a composition for producing activated carbon described above in any one of <1> to <4>, including
   melt mixing the lignin and the phenol resin at 160°C to 200°C.
<6> A molded product for producing activated carbon, formed of a composition for producing activated carbon described above in any one of <1> to <4>.
<7> A method for producing a molded product for producing activated carbon described above in <6>, including
   melt mixing the lignin and the phenol resin at 160°C to 200°C, and molding a resulting mixture.
<8> Fiber for producing activated carbon fiber, formed of a composition for producing activated carbon described above in any one of <1> to <4>.
<9> A method for producing fiber for producing activated carbon fiber described above in <8>, including
   melt spinning the lignin and the phenol resin at 160°C to 200°C.
<10> An activated carbon precursor formed of a cured product of a composition for producing activated carbon described above in any one of <1> to <4>.
<11> The activated carbon precursor described above in <10>, wherein the activated carbon precursor is a molded product.
<12> An activated carbon fiber precursor formed of a cured product of a composition for producing activated carbon described above in any one of <1> to <4>.
<13> A carbide obtained by carbonizing an activated carbon precursor described above in <10> or <11>.
<14> Carbon fiber obtained by carbonizing an activated carbon fiber precursor described above in <12>.
<15> Activated carbon obtained by activating a carbide described above in <13>.
<16> A method for producing activated carbon, including curing a composition for producing activated carbon described above in any one of <1> to <4>, carbonizing a resulting cured product, and activating a resulting carbide.
<17> A method for producing activated carbon, including curing a molded product for producing activated carbon described above in <6>, carbonizing a resulting cured product, and activating a resulting carbide.
<18> Activated carbon fiber obtained by activating carbon fiber described above in <14>.
<19> A method for producing activated carbon fiber, including curing fiber for producing activated carbon fiber described above in <8>, carbonizing a resulting cured product, and activating resulting carbon fiber.

### Advantageous Effects of Invention

An aspect of the present invention makes it possible to provide a composition for producing activated carbon, from which composition activated carbon having a high specific surface area and a high mesopore volume can be obtained by carbonization and activation and which composition has excellent moldability, a method for producing the composition for producing activated carbon, a molded product for producing activated carbon in which molded product the composition for producing activated carbon is used, a method for producing the molded product for producing activated carbon, fiber for producing activated carbon fiber, a method for producing the fiber for producing activated carbon fiber, an activated carbon precursor, a carbide of the activated carbon precursor, an activated carbon fiber precursor, carbon fiber, activated carbon, a method for producing the activated carbon, activated carbon fiber, and a method for producing the activated carbon fiber.

### Brief Description of Drawings

Fig. 1 is a graph showing a change in strength and elongation with respect to a lignin blending ratio of lignin fiber A.
Fig. 2 is a graph showing a change in strength and elongation with respect to a lignin blending ratio of lignin fiber B.
Fig. 3 is a graph showing a change in raw material yield and mesopore volume with respect to a lignin blending ratio of lignin activated carbon fiber A.
Fig. 4 is a graph showing a change in raw material yield and specific surface area with respect to the lignin blending ratio of the lignin activated carbon fiber A.
Fig. 5 is a graph showing a change in raw material yield and mesopore volume with respect to a lignin blending ratio of lignin activated carbon fiber B.
Fig. 6 is a graph showing a change in raw material yield and specific surface area with respect to the lignin blending ratio of the lignin activated carbon fiber B.
Fig. 7 shows a pore distribution of the lignin activated carbon fiber A.
Fig. 8 shows a pore distribution of the lignin activated carbon fiber B.
Fig. 9 shows a pore distribution of lignin activated carbon fiber C.
Fig. 10 shows pore distributions of lignin activated carbon A and lignin activated carbon B.
Fig. 11 is a graph showing a change in raw material yield and mesopore volume with respect to an activation time for the lignin activated carbon fiber A (with a lignin blending ratio of 50% by mass).
Fig. 12 is a graph showing a change in raw material yield and specific surface area with respect to the activation time for the lignin activated carbon fiber A (with a lignin blending ratio of 50% by mass).
Fig. 13 is a graph showing a change in pore distribution by the activation time for the lignin activated carbon fiber A (with a lignin blending ratio of 50% by mass).

### Description of Embodiments

### [Composition for producing activated carbon]

A composition for producing activated carbon in accordance with an embodiment of the present invention (hereafter also referred to as "the present composition") contains a phenol resin and lignin having a softening point of 100°C to 175°C.

Lignin is a polymer obtained by polymerizing three types of lignin monomers, which are p-hydroxycinnamic alcohols, and has a basic skeleton represented by the following Formula (1): 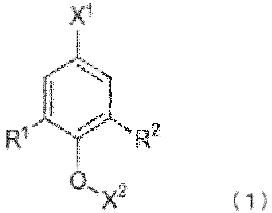 where R¹ and R² each independently represent a hydrogen atom or a methoxy group. X¹ represents being bound to a carbon atom, and X² represents being bound to a hydrogen atom or a carbon atom.

A skeleton in which both R¹ and R² are hydrogen atoms is referred to as a p-hydroxyphenyl nucleus (H-type skeleton). A skeleton in which one of R¹ and R² is a hydrogen atom is referred to as a guaiacyl nucleus (G-type skeleton). A skeleton in which neither R¹ nor R² is a hydrogen atom is referred to as a syringyl nucleus (S-type skeleton).

Lignin used in the present composition has a softening point of 100°C to 175°C. In a case where the lignin has a softening point of not less than 100°C, the present composition has a sufficient melt viscosity and has high spinnability. In a case where the lignin has a softening point of not more than 175°C, the lignin softens sufficiently before being thermally decomposed, and melt mixing can be carried out. This allows the present composition to have excellent moldability and an excellent raw material yield during production of activated carbon. The softening point of the lignin may be 120°C to 175°C, and may further be 135°C to 175°C. In terms of spinnability, moldability, and raw material yield, the softening point of the lignin is more preferably 100°C to 145°C, even more preferably 120°C to 145°C, and may be 135°C to 145°C.

The softening point is determined by the following procedure.

A sample of lignin is pulverized in a mortar, and 10 mg to 20 mg of the pulverized sample is placed in an aluminum cup (60 mm in upper circular part diameter, 53 mm in lower circular part diameter, and 15 mm in depth). The aluminum cup containing the sample is placed on a hot plate (IKA C-MAG HP7), covered with aluminum foil, and heated to 100°C. Thereafter, the temperature is increased in increments of 10°C, visual observation is carried out, and a temperature at which the sample is visually observed to be melted is regarded as the softening point.

Lignin typically contains ash. Examples of the ash include F, Cl, Br, S, Na, K, Ca, Mg, Al, Si, P, Fe, Mn, Ti, Zn, Ba, Cr, Cu, and V.

The lignin has an ash content of preferably 0. 1% by mass to 2.0% by mass, and more preferably 0.5% by mass to 0.6% by mass, with respect to a total mass of the lignin. The lignin that has an ash content which is not more than the above upper limit makes it possible to favorably carbonize and activate the present composition.

The ash content of the lignin is determined as follows. Simultaneous Thermogravimetry / Differential Thermal Analysis (TG/DTA6300, available from Hitachi High-Tech Science Corporation) is used to weigh approximately 10 mg of a sample in a Pt pan, measurement is carried out at a temperature increase rate of 10°C/min, in a measurement atmosphere (air) at 200 mL/min, and at a temperature of 35°C to 800°C, and the ash content is determined by a ratio of a mass of a remaining component.

The lignin may be commercially-available lignin, or may be lignin produced by a known production method. The lignin that has a softening point of 100°C to 175°C can be produced, for example, in accordance with a method disclosed in International Publication No. WO 2019 /031609.

The softening point of the lignin can be adjusted by, for example, a molecular weight of the lignin. For example, the lignin that has a lower molecular weight tends to have a lower softening point.

Examples of the phenol resin include novolac-type phenol resins, resol-type phenol resins, various modified phenol resins, and mixtures thereof.

The novolac-type phenol resins are phenol resins obtained by reacting phenols and aldehydes in the presence of an acidic catalyst. The resol-type phenol resins are phenol resins obtained by reacting phenols and aldehydes in the presence of a basic catalyst. Examples of the modified phenol resins include phenol resins obtained by modifying novolac-type or resol-type phenol resins by a known technique such as boron modification, silicon modification, heavy metal modification, nitrogen modification, sulfur modification, oil modification, or rosin modification.

The phenols need only be reacted with the aldehydes in the presence of an acidic or basic catalyst so as to obtain the phenol resins. Examples of the phenols include phenol, o-cresol, m-cresol, p-cresol, 2,3-xylenol, 3,5-xylenol, methylphenol, m-propylphenol, m-butylphenol, p-butylphenol, o-butylphenol, resorcinol, hydroquinone, catechol, 3-methoxyphenol, 4-methoxyphenol, 3-methylcatechol, 4-methylcatechol, methyl hydroquinone, 2-methylresorcinol, 2,3-dimethylhydroquinone, 2,5-dimethylresorcinol, 2-ethoxyphenol, 4-ethoxyphenol, 4-ethylresorcinol, 3-ethoxy-4-methoxyphenol, 2-propenylphenol, 2-isopropylphenol, 3-isopropylphenol, 4-isopropylphenol, 3,4,5-trimethylphenol, 2-isopropoxyphenol, 4-propoxyphenol, 2-allylphenol, 3,4,5-trimethoxyphenol, 4-isopropyl-3-methylphenol, pyrogallol, phloroglucinol, 1,2,4-benzenetriol, 5-isopropyl-3-methylphenol, 4-butoxyphenol, 4-t-butylcatechol, t-butylhydroquinone, 4-t-pentylphenol, 2-t-butyl-5-methylphenol, 2-phenylphenol, 3-phenylphenol, 4-phenylphenol, 3-phenoxyphenol, 4-phenoxyphenol, 4-hexyloxyphenol, 4-hexanoylresorcinol, 3,5-diisopropylcatechol, 4-hexylresorcinol, 4-heptyloxyphenol, 3,5-di-t-butylphenol, 3,5-di-t-butylcatechol, 2,5-di-t-butylhydroquinone, di-sec-butylphenol, 4-cumylphenol, nonylphenol, 2-cyclopentylphenol, 4-cyclopentylphenol, 1-naphthol, 2-naphthol, 1,2-dihydroxynaphthalene, 1,3-dihydroxynaphthalene, 1,4-dihydroxynaphthalene, 1,5-dihydroxynaphthalene, 1,5-dihydroxynaphthalene, 1,6-dihydroxynaphthalene, 1,7-dihydroxynaphthalene, 1,8-dihydroxynaphthalene, 2,3-dihydroxynaphthalene, 2,6-dihydroxynaphthalene, 2,7-dihydroxynaphthalene, bisphenol A, and bisphenol F.

In particular, phenol, o-cresol, m-cresol, p-cresol, bisphenol A, 2,3-xylenol, 3,5-xylenol, m-butylphenol, p-butylphenol, o-butylphenol, 4-phenylphenol, and resorcinol are preferable, and phenol is the most preferable. One of the phenols may be used alone, or two or more thereof may be used in combination.

Examples of the aldehydes include formaldehyde, trioxane, furfural, paraformaldehyde, benzaldehyde, methyl hemiformal, ethyl hemiformal, propyl hemiformal, salicylaldehyde, butyl hemiformal, phenyl hemiformal, acetaldehyde, propylaldehyde, phenylacetaldehyde, α-phenylpropylaldehyde, β-phenylpropylaldehyde, o-hydroxybenzaldehyde, m-hydroxybenzaldehyde, p-hydroxybenzaldehyde, o-chlorobenzaldehyde, o-nitrobenzaldehyde, m-nitrobenzaldehyde, p-nitrobenzaldehyde, o-methylbenzaldehyde, m-methylbenzaldehyde, p-methylbenzaldehyde, p-ethylbenzaldehyde, and p-n-butylbenzaldehyde.

In particular, formaldehyde, paraformaldehyde, furfural, benzaldehyde, and salicylaldehyde are preferable, and formaldehyde and paraformaldehyde are particularly preferable. One of the aldehydes may be used alone, or two or more thereof may be used in combination.

Examples of the acidic catalyst include hydrochloric acid, oxalic acid, sulfuric acid, phosphoric acid, formic acid, acetic acid, oxalic acid, butyric acid, lactic acid, benzenesulfonic acid, p-toluenesulfonic acid, boric acid, and a salt with a metal such as zinc chloride or zinc acetate.

In particular, hydrochloric acid or oxalic acid is preferably used as a catalyst, and hydrochloric acid is particularly preferable. This is because such an acidic catalyst makes it easy to obtain activated carbon that has a high mesopore ratio.

One of the acidic catalysts may be used alone, or two or more thereof may be used in combination.

The acidic catalyst is used in an amount of preferably 0.05% by mass to 1.00% by mass, and more preferably 0.05% by mass to 3.00% by mass, with respect to 100% by mass of the phenol(s).

In a case where neutralization is carried out when a reaction using an acidic catalyst is terminated, a sodium hydroxide solution, ammonia water, zinc acetate, or potassium hydroxide can be used as a neutralizing liquid.

Examples of the basic catalyst include alkali metal hydroxides such as sodium hydroxide and lithium hydroxide; alkaline earth metal hydroxides such as calcium hydroxide and barium hydroxide; ammonium hydroxide; and amines such as diethylamine, triethylamine, triethanolamine, ethylenediamine, and hexamethylenetetramine.

In particular, amines are preferable, and an amine selected from ammonia and diethylamine is preferable. This is because such an amine makes it easy to obtain a solid resol-type phenol resin.

One of the basic catalysts may be used alone, or two or more thereof may be used in combination.

The basic catalyst is used in an amount of preferably 0.5% by mass to 3.0% by mass, and more preferably 0.8% by mass to 2.0% by mass, with respect to 100% by mass of the phenol(s).

Among the above-listed phenol resins, a novolac-type phenol resin and a resol-type phenol resin are preferable. A novolac-type phenol resin and a solid resol-type phenol resin are more preferable, and a novolac-type phenol resin is particularly preferable. This is because the phenol resin in solid form makes it easy to uniformly disperse the lignin and an additive described later.

The novolac-type phenol resin has more excellent thermal stability than the resol-type phenol resin, and is less likely to cause unintended polymerization by heating during melting. This enables stable molding into various shapes, such as a fibrous shape.

The novolac-type phenol resin has a weight average molecular weight of preferably 1,000 to 10,000, more preferably 2,000 to 9,000, and even more preferably 3,000 to 8,000. The weight average molecular weight that is in the foregoing range results in more excellent spinnability.

The weight average molecular weight is a polystyrene equivalent value measured by gel permeation chromatography (GPC).

The present composition may further contain an other component(s), if necessary, provided that the other component(s) do/does not impair an effect of the present invention.

Examples of the other component(s) include fatty acid, fatty acid amide, fatty acid ester, fatty acid metal salt, fatty acid alcohol, fatty acid hydrazide, a polyoxyethylene derivative of fatty acid ester, and a silane coupling agent.

In the present composition, a ratio of the lignin to a total mass of the lignin and the phenol resin (hereafter referred to as "lignin blending ratio") in the present composition is preferably 5% by mass to 90% by mass, more preferably 20% by mass to 80% by mass, and even more preferably 40% by mass to 60% by mass. In a case where the lignin blending ratio is not less than the foregoing lower limit, activated carbon tends to have a higher mesopore volume. In a case where the lignin blending ratio is not more than the foregoing upper limit, the present composition tends to have higher moldability, a cured product of the present composition tends to have a higher strength and higher elongation, and activated carbon tends to have a higher specific surface area.

A total content of the lignin and the phenol resin in the present composition is preferably not less than 87% by mass, more preferably not less than 93% by mass, and may be 100% by mass, with respect to a total mass of the present composition.

For example, the present composition is obtained by melt mixing the foregoing lignin and the foregoing phenol resin at 160°C to 200°C. In so doing, an other component(s) may be mixed if necessary.

A temperature (melt mixing temperature) at which the lignin and the phenol resin are melt mixed is 160°C to 200°C, and preferably 175°C to 185°C. The melt mixing temperature that is not less than 160°C allows the lignin to sufficiently soften. This makes it possible to easily mix the lignin and the phenol resin. The melt mixing temperature that is not more than 200°C easily prevents or reduces thermal decomposition of the lignin.

A time (melt mixing time) during which the lignin and the phenol resin are melt mixed is preferably 30 minutes to 120 minutes, and more preferably 60 minutes to 90 minutes. The melt mixing time that is not less than the foregoing lower limit allows the lignin and the phenol resin to be uniformly mixed. The melt mixing time that is not more than the foregoing upper limit easily prevents or reduces thermal decomposition of the lignin.

Melt mixing can be carried out with use of a known melt mixing device. Examples of the melt mixing device include an extruder-type mixer, a mixing roll, a Banbury mixer, and a high-speed twin-screw continuous mixer.

### [Molded product for producing activated carbon]

A molded product for producing activated carbon in accordance with an embodiment of the present invention (hereafter also referred to as "the present molded product") is a molded product formed of the foregoing present composition.

Examples of a shape of the molded product include a fibrous shape, a plate-like shape, a particulate shape, and a film shape. Among these, the fibrous shape is preferable in terms of a high specific surface area, air permeability, liquid permeability, flexibility, and secondary moldability into cloth or felt.

In a case where the present molded product is fiber, the present molded product is used, for example, as fiber for producing activated carbon fiber.

The fiber has a fineness of preferably 1 denier to 10 denier, and more preferably 2 denier to 6 denier. The fineness that is not more than the foregoing upper limit is less likely to cause poor curing when the fiber is cured, and allows a cured product to have a more excellent strength and more excellent elongation.

For example, the present molded product is obtained by melt mixing the foregoing lignin and the foregoing phenol resin at 160°C to 200°C, and molding a resulting mixture (the present composition).

A preferable temperature at which the lignin and the phenol resin are melt mixed and a time during which the lignin and the phenol resin are melt mixed are similar to those described above. In so doing, an other component(s) may be mixed if necessary.

A known molding method is applicable to a molding method in accordance with the shape of the molded product.

For example, in the case of molding into a fibrous shape, it is possible to select, as appropriate, a known method such as wet spinning, dry spinning, dry and wet spinning, melt spinning, gel spinning, or liquid crystal spinning. In particular, melt spinning is preferred due to simplicity of a device and economic advantage.

In a case where melt spinning is used as a spinning method, a common melt spinning device can be used. A melting device of the melt spinning device may be of a grid melter type, a single-screw extruder type, a twin-screw extruder type, or a tandem extruder type.

In order to prevent oxidation of the molten present composition, it is possible to carry out nitrogen substitution in the melt spinning device, or it is possible to use an extruder provided with a vent to carry out an operation to remove a slight amount of residual solvent or monomers.

In melt spinning, a temperature condition is preferably 160°C to 200°C, and more preferably 175°C to 185°C. The temperature condition that is set to be not less than a preferable lower limit allows the lignin to sufficiently soften, and makes it possible to efficiently carry out spinning. The temperature condition that is set to be not more than a preferable upper limit easily prevents or reduces thermal decomposition of the lignin.

As a spinneret, an ordinary spinneret can be used. The spinneret has a pore size of preferably not less than 0.05 mm and less than 1 mm, and more preferably not less than 0.1 mm and less than 0.5 mm, and has a capillary part whose (length L/diameter D) is preferably not less than 0.5 and less than 10, and more preferably 1 to 5. The pore diameter and LID that are set in the respective foregoing preferable ranges make it possible to stably carry out spinning.

In the case of a method for producing special fiber (e.g., in the case of parallel composite fiber, core-sheath composite fiber, sea-island composite fiber, or the like), it is possible to use a conjugate spinneret with which a side-by-side or sheath-core, or third component polymer is combined.

A spinning speed is preferably not less than 15 m/min and less than 3,000 m/min, more preferably not less than 30 m/min and less than 2,000 m/min, and even more preferably not less than 50 m/min and less than 1,600 m/min. The spinning speed that is set to be not less than a preferable lower limit makes it possible to efficiently carry out spinning. The spinning speed that is set to be less than a preferable upper limit makes it possible to prevent or reduce occurrence of thread breakage during spinning.

In the case of molding into a plate-like shape, for example, a metal mold need only be used to carry out molding.

In the case of molding into a particulate shape, for example, a granulator need only be used to carry out granulation.

In the case of molding into a film shape, for example, a film forming device need only be used to form a film.

In a case where a mixture is molded by a melt molding method (such as melt spinning) in a molding step, a melt mixing step and the molding step may be continuously carried out, and a step of cooling a mixture that has been obtained in the melt mixing step and that is in a molten state is provided between the melt mixing step and the molding step.

### [Activated carbon precursor]

An activated carbon precursor in accordance with an embodiment of the present invention (hereafter also referred to as "the present precursor") is formed of the foregoing present cured product.

The present precursor is preferably a molded product. The present composition has excellent moldability. Thus, in a case where the present precursor is a molded product, the present invention is highly useful.

Examples of a shape of the molded product include shapes similar to those listed above. Same applies to a preferable aspect of the molded product. That is, the present precursor is preferably an activated carbon fiber precursor.

The present precursor can be obtained by curing the molded present composition (the present molded product) or the present composition that has not been molded.

In a case where the phenol resin is a novolac-type phenol resin, and the present molded product is cured, the present molded product can be cured by bringing, into contact with the present molded product, an aqueous treatment solution containing a catalyst and, if necessary, an aldehyde.

In a case where the phenol resin is a novolac-type phenol resin, and the present composition that has not been molded is cured, the present composition can be cured by mixing, with the present composition, a catalyst and, if necessary, an aldehyde.

Examples of the catalyst include basic catalysts such as amines such as ammonium hydroxide, diethylamine, triethylamine, triethanolamine, ethylenediamine, and hexamethylenetetramine, and mixtures thereof; and acidic catalysts such as hydrochloric acid, sulfuric acid, phosphoric acid, formic acid, acetic acid, oxalic acid, butyric acid, lactic acid, benzenesulfonic acid, p-toluenesulfonic acid, boric acid, zinc chloride, a salt of a metal such as zinc chloride or zinc acetate, and mixtures thereof. One of the catalysts may be used alone, or two or more thereof may be used in combination.

In a case where the phenol resin is a novolac-type phenol resin, and the present molded product is cured, an acidic catalyst is preferably used as the catalyst.

In a case where the phenol resin is a novolac-type phenol resin, and the present composition that has not been molded is cured, the catalyst is preferably hexamethylenetetramine.

In a case where the treatment solution contains the acidic catalyst, the treatment solution has an acidic catalyst concentration of preferably 16.5% by mass to 19.0% by mass, and more preferably 17.5% by mass to 18.0% by mass, with respect to a total mass of the treatment solution. The acidic catalyst concentration that is in the foregoing range allows a cured product to have good elongation.

Examples of the aldehydes include formaldehyde, trioxane, furfural, paraformaldehyde, benzaldehyde, methyl hemiformal, ethyl hemiformal, propyl hemiformal, salicylaldehyde, butyl hemiformal, phenyl hemiformal, acetaldehyde, propylaldehyde, phenylacetaldehyde, α-phenylpropylaldehyde, β-phenylpropylaldehyde, o-hydroxybenzaldehyde, m-hydroxybenzaldehyde, p-hydroxybenzaldehyde, o-chlorobenzaldehyde, o-nitrobenzaldehyde, m-nitrobenzaldehyde, p-nitrobenzaldehyde, o-methylbenzaldehyde, m-methylbenzaldehyde, p-methylbenzaldehyde, p-ethylbenzaldehyde, and p-n-butylbenzaldehyde.

In particular, formaldehyde, paraformaldehyde, furfural, benzaldehyde, and salicylaldehyde are preferable, and formaldehyde and paraformaldehyde are more preferable. One of the aldehydes may be used alone, or two or more thereof may be used in combination.

In a case hexamethylenetetramine is used as the catalyst, it is unnecessary to use any aldehyde.

In a case where the treatment solution is used, curing is preferably carried out in the treatment solution by heating at a temperature of not less than 60°C and less than 110°C for not less than 3 hours and less than 30 hours.

Curing may be carried out by heating under a gas phase after contact with the treatment solution or mixing of the catalyst and, if necessary, an aldehyde.

Further, after heat curing is carried out in the treatment solution, washing with water and drying may be carried out, and curing may be further carried out by heating at a temperature of 100°C to 300°C in an inert gas such as nitrogen, helium, or carbon dioxide gas.

In addition, a known curing treatment can be carried out.

A specific method of contact with the treatment solution is not particularly limited. Examples of a method for obtaining a fibrous cured product (activated carbon fiber precursor) include a method in which the present composition molded in staple or tow form is immersed in a treatment solution in a reaction container so as to be subjected to a curing treatment carried out in a batch manner, a method in which the present composition molded in bobbin or skein form is brought into contact with a treatment solution so as to be subjected to a curing treatment, and a method in which the present composition molded in tow form is continuously brought into contact with a treatment solution so as to be subjected to a curing treatment.

In contrast, in a case where the phenol resin is a resol-type phenol resin, a cured product can be obtained by carrying out a heat treatment by a wet heat method or a dry heat method.

A heat treatment temperature is preferably 100°C to 220°C, and more preferably 120°C to 180°C. A heat treatment time is preferably 5 minutes to 120 minutes, and more preferably 20 minutes to 60 minutes.

### [Carbide]

A carbide in accordance with an embodiment of the present invention (hereafter also referred to as "the present carbide") is obtained by carbonizing the present precursor.

The present carbide has a shape similar to the shape of the present precursor. For example, in a case where the present precursor is fibrous (an activated carbon fiber precursor), the present carbide is also fibrous. A fibrous carbide is also referred to as carbon fiber.

Carbonization can be carried out by a conventionally known method of heating in the presence of an inert gas.

Examples of the inert gas for use in carbonization include gases substantially free of oxygen, such as nitrogen, helium, argon, hydrogen, carbon monoxide, and carbon dioxide.

A temperature during carbonization is preferably 480°C to 1,200°C, more preferably 520°C to 1,000°C, and even more preferably 600°C to 900°C.

Carbonization can be carried out with use of, for example, a multistage furnace, a rotary kiln furnace, or a fluidized bed furnace.

The present carbide is activated so as to be activated carbon.

### [Activated carbon]

Activated carbon in accordance with an embodiment of the present invention (hereafter also referred to as "the present activated carbon") is obtained by carbonizing the present carbide. In other words, the activated carbon is obtained by carbonizing and activating the present precursor.

The present activated carbon has a shape similar to the shape of the present carbide. For example, in a case where the present carbide is fibrous (carbon fiber), the present activated carbon is also fibrous. Fibrous activated carbon is also referred to as activated carbon fiber.

The present activated carbon has a mesopore. The mesopore is a pore having a diameter of 2 nm to 50 nm.

The present activated carbon may have not only the mesopore but also a micropore having a diameter of less than 2 nm and/or a macropore having a diameter of more than 50 nm.

The present activated carbon has a specific surface area of preferably 1,400 m²/g to 2,400 m²/g, more preferably 1,600 m²/g to 2,400 m²/g, and even more preferably 1,800 m²/g to 2,400 m²/g. The specific surface area that is not less than the forgoing lower limit tends to improve adsorption performance and capacitance. The specific surface area that is not more than the foregoing upper limit tends to increase a mesopore volume.

Note here that the specific surface area is a value determined by a BET method (BET specific surface area).

The present activated carbon has a mesopore volume of preferably is 0.1 cm³/g to 2.6 cm³/g, more preferably 0.5 cm³/g to 2.6 cm³/g, and even more preferably 1.9 cm³/g to 2.6 cm³/g. The mesopore volume that is not less than the forgoing lower limit tends to improve adsorption performance. The mesopore volume that is not more than the foregoing upper limit tends to increase the specific surface area and yield during production.

Note here that the mesopore volume is a value determined by a BJH method.

The present activated carbon is obtained by activating the foregoing carbide.

Activation can be carried out by an activation method conventionally known in the art, such as a gas activation method or a chemical activation method.

In the gas activation method, activation gas is brought into contact with a carbide so as to activate the carbide.

Examples of the activation gas include water vapor, air, carbon monoxide, carbon dioxide, hydrogen chloride, oxygen, and gas consisting of a mixture of these activation gases.

In the chemical activation method, a chemical is brought into contact with a carbide so as to activate the carbide.

Examples of the chemical include alkali metal hydroxides such as sodium hydroxide and potassium hydroxide; alkaline earth metal hydroxides such as calcium hydroxide; inorganic acids such as boric acid, phosphoric acid, sulfuric acid, and hydrochloric acid; and inorganic salts such as zinc chloride.

In the case of the chemical activation method, after activation, a product and a used chemical may be neutralized with acid or alkali, or removed by, for example, washing with water.

Among the above-described activation methods, the gas activation method is preferable in terms of convenience of a facility and in that no special treatment is required after activation, and the gas activation method carried out with use of water vapor is particularly preferable.

Activation can be carried out with use of, for example, a multistage furnace, a rotary kiln furnace, or a fluidized bed furnace.

An activation temperature (a temperature at which the activation gas or the chemical agent is brought into contact with the carbide) is preferably 750°C to 1,200°C, more preferably 850°C to 1,200°C, and even more preferably 900°C to 1,000°C in the gas activation method, and is preferably 550°C to 800°C, more preferably 600°C to 800°C, and even more preferably 700°C to 750°C in the chemical activation method.

An activation time (a time during which the activation gas or the chemical agent is brought into contact with the carbide) is preferably 30 minutes to 75 minutes, and more preferably 45 minutes to 60 minutes. The activation time that is not less than the foregoing lower limit tends to achieve sufficient growth of the mesopore and increase the mesopore volume. The activation time that is not more than the foregoing upper limit tends to increase the specific surface area of the activated carbon and the yield.

### Examples

The present invention will be specifically described below with reference to Examples, but is not limited by the following description. In the following description, "%" indicates "mass%", unless otherwise specified.

### <Materials used>

Lignin A: available from Idemitsu Kosan Co., Ltd., having a softening point of 135°C to 145°C, having an ash content of 0.5%
Lignin B: available from Idemitsu Kosan Co., Ltd., having a softening point of 165°C to 175°C, having an ash content of 0.6%
Lignin C: available from Idemitsu Kosan Co., Ltd., having a softening point of 125°C to 135°C, having an ash content of 0.5%
Phenol resin A: a novolac type, available from Gun Ei Chemical Industry Co., Ltd., having a weight average molecular weight of 6,201
Phenol resin B: a novolac type, available from Gun Ei Chemical Industry Co., Ltd., having a weight average molecular weight of 3,980
Phenol resin fiber: fiber formed of a cured product of a novolac-type phenol resin, available from Gun Ei Chemical Industry Co., Ltd., having a trade name of "KF-0570"

Methods for measuring the softening point, the ash content, and the weight average molecular weight are as below.

Softening point: A sample was pulverized in a mortar, and 10 mg to 20 mg of the pulverized sample was placed in an aluminum cup (60 mm in upper circular part diameter, 53 mm in lower circular part diameter, and 15 mm in depth). The aluminum cup containing the sample was placed on a hot plate (IKA C-MAG HP7) and covered with aluminum foil. After the aluminum cup was heated to 100°C, the temperature was increased in increments of 10°C, visual observation was carried out, and a temperature at which the sample was visually observed to be melted was regarded as the softening point.

Ash: TG/DTA6300 available from Hitachi High-Tech Science Corporation was used to weigh approximately 10 mg of a sample in a Pt pan, measurement was carried out at a temperature increase rate of 10°C/min, in a measurement atmosphere (air) at 200 mL/min, and at a temperature of 35°C to 800°C, a ratio of a mass of a remaining component was determined, and a value of the determined ratio was regarded as the ash content.

Weight average molecular weight: The weight average molecular weight was measured, as a polystyrene equivalent value, by gel permeation chromatography (GPC) under the following conditions.
GPC device: HLC8320GPC available from Tosoh Corporation
Column: TSKgel G3000HXL+G3000HXL+G2000HXL available from Tosoh Corporation

### <Examples 1 to 8>

### (Production of lignin activated carbon fiber)

Lignin activated carbon fiber was produced by the following procedure.
(1) Into a reaction container (500-mL flask) provided with a thermometer, a stirring device, and a condenser, 100 g of the lignin A or the lignin B and 100 g of the phenol resin A (mass ratio: lignin/phenol resin = 5/5) were introduced, and a resulting mixture was stirred for 30 minutes with a temperature increased to 180°C.
(2) Subsequently, a volatile component was removed by carrying out stirring for 30 minutes under reduced pressure of 5 mmHg while maintaining the temperature at 180°C, so that a dark-brown solid mixed resin was finally obtained.
(3) The above-described mixed resin was pulverized in granular form and charged into a nozzle provided with a thermometer and a nichrome line heater, and having a monohole in a lower part thereof. After the nozzle was heated so as to melt the mixed resin, a melted product was extruded by using nitrogen gas to apply a pressure from an upper part of the nozzle, and spinning was carried out.
(4) Next, resulting fiber was immersed in an aqueous solution of 17.5% to 18.0% hydrochloric acid and 9.5% to 10.0% formalin in a poly bottle, and a resulting mixture was heated at approximately 95°C for 7 hours so as to carry out a curing reaction.
(5) After the curing reaction, neutralization, cleaning, and drying were carried out, so that dark-brown lignin fiber was obtained.
(6) Fineness (denier) of the lignin fiber thus obtained was measured by a denier computer (DC-11B available from Search Co., Ltd.), and a strength and elongation of the lignin fiber were measured by a tensile tester (RTG-1210 available from A&D Company, Limited, sample length: 20 mm, testing rate: 20 mm/min).
(7) The lignin fiber obtained above in (5) was placed in a crucible, heated from room temperature at 5°C/min under a nitrogen atmosphere, held at 300°C for 1 hour, and then heated to 800°C at 5°C/min and held for 1 hour, so that lignin carbon fiber was obtained.
(8) The lignin carbon fiber thus obtained was placed in a crucible, placed in a horizontal tubular furnace, and heated to 900°C at a temperature increase rate of 5°C/min while nitrogen gas was being passed through the horizontal tubular furnace. Then, by introducing nitrogen gas passed through warm water adjusted in advance to 80°C, activation was carried out by continuing heating at 900°C for 60 minutes while introducing water vapor together with nitrogen gas into the foregoing tubular furnace at 4.125 mL/min. Subsequently, lignin activated carbon fiber was obtained by cooling while introducing only nitrogen gas.
(9) Approximately 50 mg of the lignin activated carbon fiber thus obtained was collected and vacuum-dried at 300°C under reduced pressure for 4 hours. Thereafter, a specific surface area and pore distribution analyzer (3Flex available from Micromeritics Instrument Corporation) was used to measure, at a relative pressure in a range of 1.0×10⁻⁷ to 0.99, an amount of nitrogen gas adsorbed at a boiling point (-195.8°C) of liquid nitrogen, so that an adsorption isotherm was created. The following calculations were carried out on the basis of a result thereof.
   [a] A BET specific surface area (m²/g) was calculated by a BET method.
   [b] A micropore volume (cm³/g) and a micropore distribution were calculated by an MP method.
   [c] A mesopore volume (cm³/g) and a mesopore distribution were calculated by a BJH method.
(10) A carbonization yield, an activation yield, and a raw material yield were calculated by the following equations: Carbonization yield (%) = (post-carbonization dry mass (g)/pre-carbonation dry mass (g)) × 100 Activation yield (%) = (post-activation dry mass (g)/preactivation dry mass (g)) × 100 Raw material yield (%) = (carbonization yield (%) × activation yield (%)) / 100
(11) The operations described above in (1) to (10) were also carried out at mixing ratios (lignin/phenol resin) of 5/95, 2/8, 5/5, 8/2, and 9/1 with respect to the lignin A, and at mixing ratios (lignin/phenol resin) of 5/95, 2/8, and 5/5 with respect to the lignin B.

### <Example 9>

(12) Into a reaction container (3-L flask), 1,250 g of the lignin C and 1,250 g of the phenol resin B (mass ratio: lignin/phenol resin B = 5/5) were introduced and heated in an oven at 170°C for 5 hours so as to be melted. Thereafter, a thermometer, a stirring device, and a condenser were attached to the reaction container, and stirring was carried out at 170°C for 60 minutes.
(13) Subsequently, a volatile component was removed by carrying out stirring for 60 minutes under reduced pressure of 5 mmHg while maintaining the temperature at 170°C, so that a dark-brown solid mixed resin was finally obtained.

Thereafter, operations similar to the operations described above in (3) to (10) were carried out, so that lignin activated carbon fiber was obtained. Note, however, that only the activation time described above in (8) was set as 33 minutes.

### <Comparative Example 1>

Instead of the lignin fiber, phenol resin fiber was used to carry out operations similar to the operations described above in (6) to (10), so that phenol resin activated carbon fiber was obtained.

### <Comparative Examples 2 and 3>

Instead of the lignin fiber, the powdered lignin A or lignin B was used to carry out operations similar to the operations described above in (7) to (10), so that powdered lignin activated carbon was obtained.

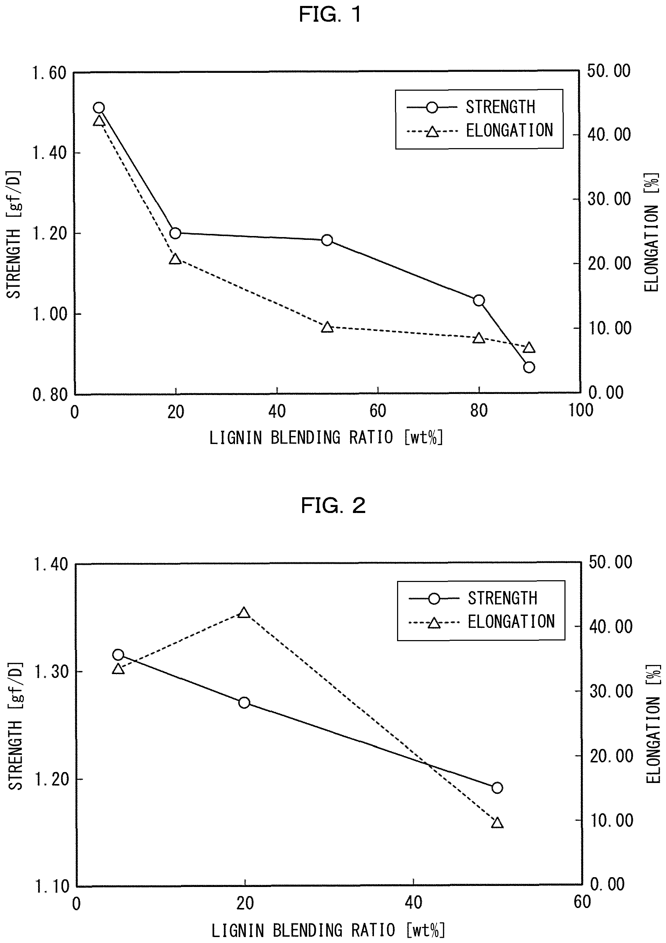

Table 1 shows fineness and tensile test results for the lignin fiber of each of Examples 1 to 9 and the phenol resin fiber of Comparative Example 1. Fig. 1 is a graph in which (i) a lignin blending ratio and (ii) a strength and elongation of the lignin fiber A of each of Examples 1 to 5 are plotted on the horizontal axis and the vertical axis, respectively. Fig. 2 is a graph in which (i) a lignin blending ratio and (ii) a strength and elongation of the lignin fiber B of each of Examples 6 to 8 are plotted on the horizontal axis and the vertical axis, respectively. The lignin fiber containing the lignin and the phenol resin had a sufficient strength and sufficient elongation.

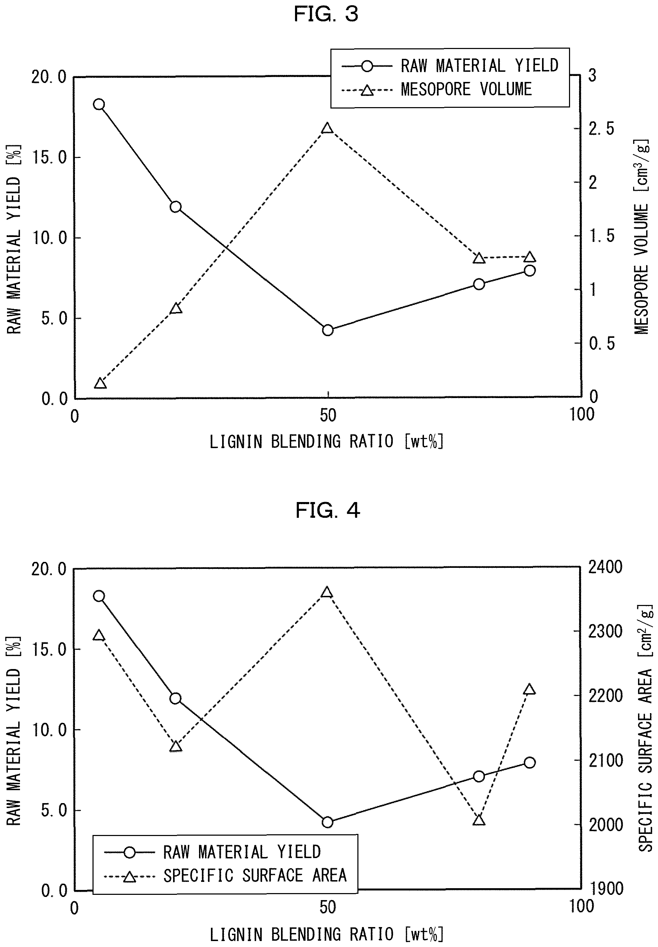

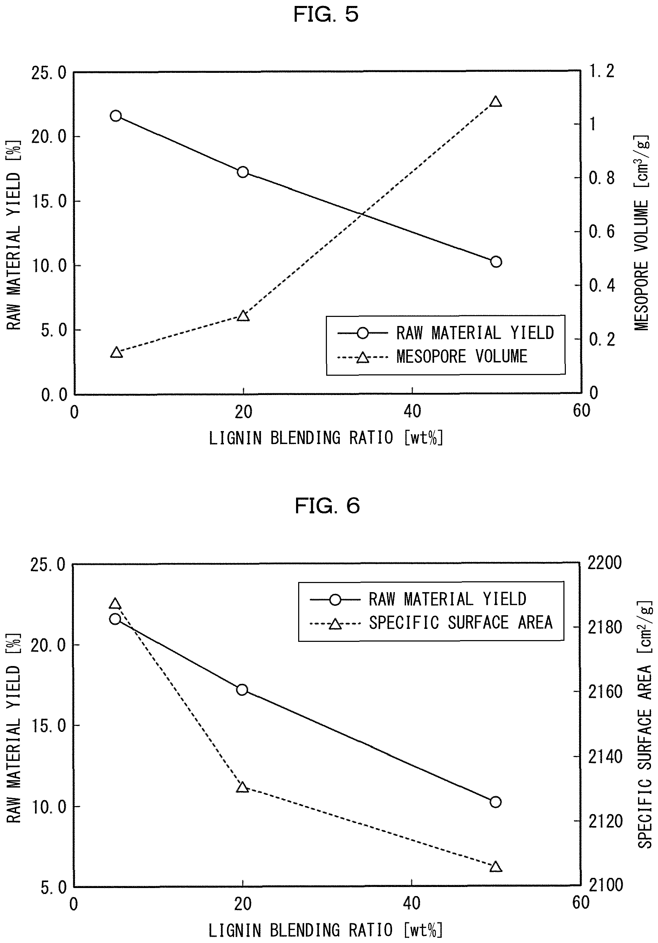

Table 2 shows yields in carbonization and activation processes and specific surface area and pore distribution measurement results for lignin activated carbon fiber, phenol resin activated carbon fiber, and lignin activated carbon. Fig. 3 is a graph in which (i) a lignin blending ratio and (ii) a raw material yield and a mesopore volume of lignin activated carbon fiber A of each of Examples 1 to 5 are plotted on the horizontal axis and the vertical axis, respectively. Fig. 4 is a graph in which (i) the lignin blending ratio and (ii) the raw material yield and a specific surface area of the lignin activated carbon fiber A of each of Examples 1 to 5 are plotted on the horizontal axis and the vertical axis, respectively. Fig. 5 is a graph in which (i) a lignin blending ratio and (ii) a raw material yield and a mesopore volume of lignin activated carbon fiber B of each of Examples 6 to 8 are plotted on the horizontal axis and the vertical axis, respectively. Fig. 6 is a graph in which (i) the lignin blending ratio and (ii) the raw material yield and a specific surface area of the lignin activated carbon fiber B of each of Examples 6 to 8 are plotted on the horizontal axis and the vertical axis, respectively. The lignin activated carbon fiber had a maximum specific surface area of 2,363 cm²/g and had a maximum mesopore volume of 2.5200 cm³/g. Thus, a high specific surface area and a high mesopore volume have been achieved.

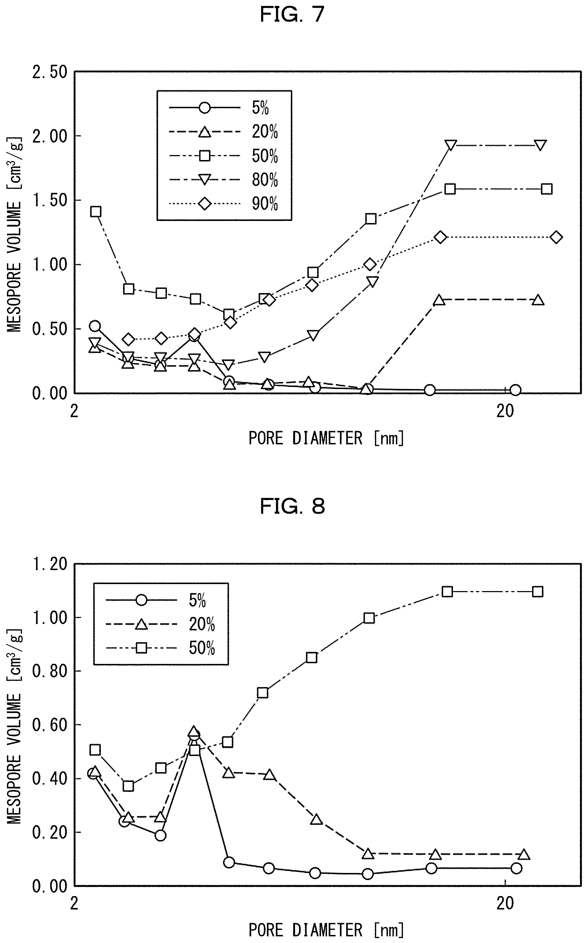

Figs. 7, 8, and 9 show respective pore distributions of the lignin activated carbon fiber A in which the lignin A was used, the lignin activated carbon fiber B in which the lignin B was used, and the lignin activated carbon fiber C in which the lignin C was used. A peak of the pore distribution appeared at a pore diameter of 3.8 nm in the lignin activated carbon fiber A with a lignin blending ratio of 5%, and a peak of the pore distribution appeared at a pore diameter of 15 nm in the lignin activated carbon fiber A with a lignin blending ratio of not less than 20%; a peak of the pore distribution appeared at a pore diameter of 3.8 nm in the lignin activated carbon fiber B with a lignin blending ratio of 20%, and a peak of the pore distribution appeared at a pore diameter of 15 nm in the lignin activated carbon fiber B with a lignin blending ratio of 50%; and a peak of the pore distribution appeared at a pore diameter of 22 nm in the lignin activated carbon fiber C with a lignin blending ratio of 50%.

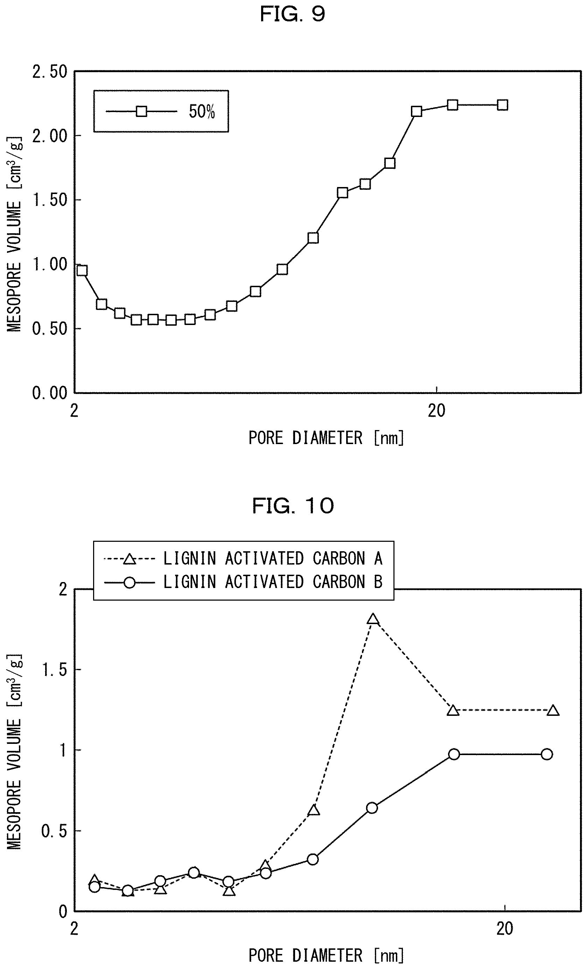

Fig. 10 shows a pore distribution of the lignin activated carbon obtained in each of Comparative Examples 2 and 3. Peaks of the pore distribution appeared at a pore diameter of 9.9 nm in the lignin activated carbon A in which the lignin A was used, and at a pore diameter of 15 nm in the lignin activated carbon in which the lignin B was used.

**[Table 1]**

| | | Lignin blending ratio [wt%] | Fineness [D] | Strength [gf/D] | Elongation [%] |
|---|---|---|---|---|---|
| Example 1 | Lignin fiber A | 5 | 1.72 | 1.51 | 42.53 |
| Example 2 | | 20 | 5.00 | 1.20 | 21.05 |
| Example 3 | | 50 | 6.36 | 1.18 | 10.40 |
| Example 4 | | 80 | 5.48 | 1.03 | 8.59 |
| Example 5 | | 90 | 3.29 | 0.86 | 7.14 |
| Example 6 | Lignin fiber B | 5 | 4.52 | 1.32 | 33.81 |
| Example 7 | | 20 | 5.26 | 1.27 | 42.42 |
| Example 8 | | 50 | 4.93 | 1.19 | 9.70 |
| Example 9 | Lignin fiber C | 50 | 5.34 | 0.99 | 10.19 |
| Comparative Example 1 | Phenol resin fiber | 0 | 5.00 | 1.55 | 25.6 |

**[Table 2]**

| | | Lignin blending ratio [wt%] | Carbonization yield [%] | Activation yield [%] |
|---|---|---|---|---|
| Example 1 | Lignin activated carbon fiber A | 5 | 57.2 | 32.0 |
| Example 2 | | 20 | 53.9 | 22.1 |
| Example 3 | | 50 | 53.0 | 7.9 |
| Example 4 | | 80 | 50.3 | 14.0 |
| Example 5 | | 90 | 49.0 | 16.1 |
| Example 6 | Lignin activated carbon fiber B | 5 | 58.7 | 36.8 |
| Example 7 | | 20 | 56.6 | 30.4 |
| Example 8 | | 50 | 51.2 | 19.9 |
| Example 9 | Lignin activated carbon fiber C | 50 | 52.9 | 17.2 |
| Comparative Example 1 | Phenol resin activated carbon fiber | 0 | 59.2 | 43.4 |
| Comparative Example 2 | Lignin activated carbon A (powder) | 100 | 40.6 | 26.0 |
| Comparative Example 3 | Lignin activated carbon B (powder) | 100 | 41.3 | 36.9 |

| | | Raw material yield [%] | Specific surface area [cm²/g] | Micropore volume [cm³/g] | Mesopore volume [cm³/g] |
|---|---|---|---|---|---|
| Example 1 | Lignin activated carbon fiber A | 18.3 | 2,297 | 0.9932 | 0.1464 |
| Example 2 | | 11.9 | 2,124 | 0.6564 | 0.8450 |
| Example 3 | | 4.2 | 2,363 | 0.3737 | 2.5200 |
| Example 4 | | 7.0 | 2,008 | 0.4807 | 1.2998 |
| Example 5 | | 7.9 | 2,211 | 0.6144 | 1.3091 |
| Example 6 | Lignin activated carbon fiber B | 21.6 | 2,188 | 0.9147 | 0.1583 |
| Example 7 | | 17.2 | 2,131 | 0.8376 | 0.2928 |
| Example 8 | | 10.2 | 2,106 | 0.6424 | 1.0875 |
| Example 9 | Lignin activated carbon fiber C | 9.1 | 1,505 | 0.2806 | 0.8369 |
| Comparative Example 1 | Phenol resin activated carbon fiber | 25.8 | 2,121 | 0.9269 | 0.1399 |
| Comparative Example 2 | Lignin activated carbon A (powder) | 10.6 | 1,468 | 0.3646 | 0.9172 |
| Comparative Example 3 | Lignin activated carbon B (powder) | 15.2 | 1,014 | 0.2529 | 0.6996 |

In Tables 1 and 2, and Figs. 1 to 10, "lignin blending ratio" refers to a ratio (%) of the lignin to a total mass of the lignin and the phenol resin, and "D" means denier (same applies hereinafter).

### <Examples 10 to 13>

Operations similar to the operations described above in (1) to (5) of Example 3 were carried out, so that the lignin fiber A with a lignin blending ratio of 50% (lignin A/phenol resin = 5/5) was prepared.

Lignin activated carbon fiber was obtained by carrying out operations similar to the operations described above in (7) to (10), except that, for the lignin fiber A, the activation time described above in (8) was changed to 10 minutes, 30 minutes, 45 minutes, or 60 minutes.

### <Comparative Examples 4 to 6>

Phenol resin activated carbon fiber was obtained by carrying out operations similar to the operations described above in (7) to (10), except that phenol resin fiber was used instead of the lignin fiber and that the activation time described above in (8) was changed to 10 minutes, 30 minutes, or 60 minutes.

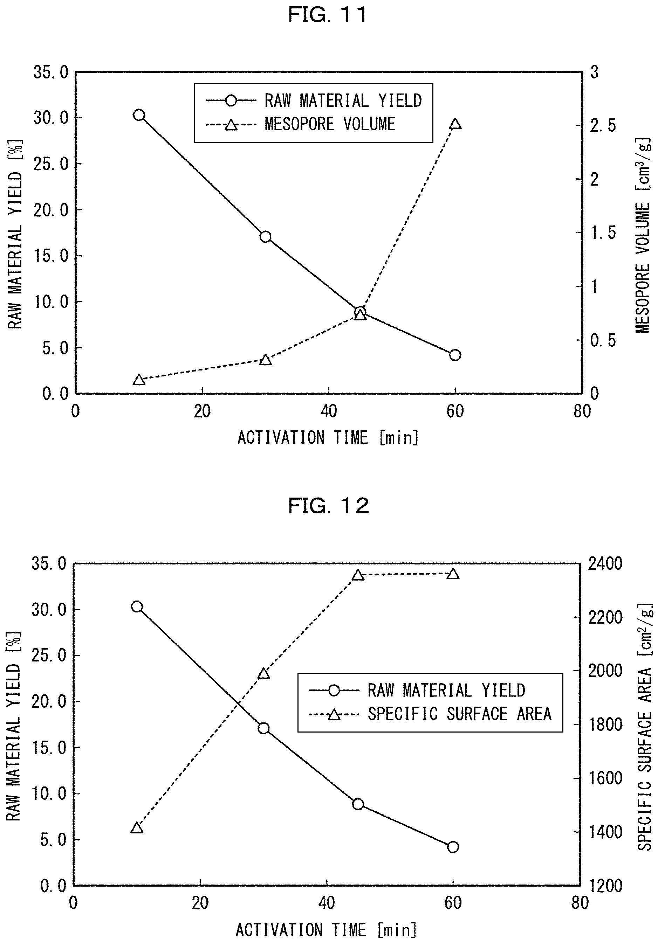

Table 3 and Figs. 11 and 12 show yields in carbonization and activation processes and specific surface area and pore distribution measurement results at activation times for the lignin activated carbon fiber A with a lignin blending ratio of 50% and the phenol resin activated carbon fiber, respectively. It has turned out that, in the case of the lignin fiber A, the mesopore volume sharply increased after an activation time of 45 minutes, and the specific surface area reached saturation at an activation time of 45 minutes.

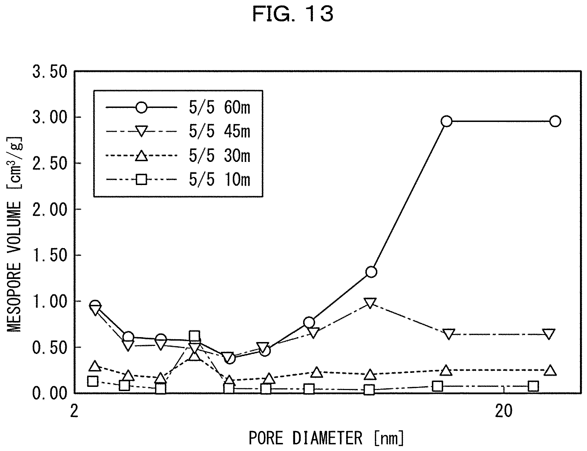

Fig. 13 shows a pore distribution at each activation time for the lignin activated carbon fiber A with a lignin blending ratio of 50%. Peaks of the pore distribution appeared at a pore diameter of 3.8 nm up to an activation time of 30 minutes, at a pore diameter of 9.7 nm at an activation time of 45 minutes, and at a pore diameter of 15 nm at an activation time of 60 minutes.

**[Table 3]**

| | | Activation time [min] | Carbonization yield [%] | Activation yield [%] |
|---|---|---|---|---|
| Example 10 | Lignin activated carbon fiber A (lignin blending ratio: 50%) | 10 | 52.4 | 57.8 |
| Example 11 | | 30 | 52.5 | 32.5 |
| Example 12 | | 45 | 52.9 | 16.8 |
| Example 13 | | 60 | 53.0 | 7.9 |
| Comparative Example 4 | Phenol resin activated carbon fiber | 10 | 59.2 | 80.0 |
| Comparative Example 5 | | 30 | 59.2 | 62.7 |
| Comparative Example 6 | | 60 | 59.2 | 43.4 |

| | | Raw material yield [%] | Specific surface area [cm²/g] | Micropo volume [cm³/g] re volume | Mesopore volume [cm³/g] |
|---|---|---|---|---|---|
| Example 10 | | 30.3 | 1,417 | 0.5447 | 0.1333 |
| Example 11 | | 17.1 | 1,991 | 0.7430 | 0.3196 |
| Example 12 | Lignin activated carbon fiber A (lignin blending ratio: 50%) | 8.9 | 2,358 | 0.8603 | 0.7370 |
| Example 13 | | 4.2 | 2,363 | 0.3737 | 2.5200 |
| Comparative Example 4 | | 47.5 | 1,083 | 0.4277 | n.d. |
| Comparative Example 5 | Phenol resin activated carbon fiber | 37.1 | 1,471 | 0.6064 | 0.0304 |
| Comparative Example 6 | | 25.8 | 2,121 | 0.9269 | 0.1399 |

### Industrial Applicability

The present invention makes it possible to provide a composition for producing activated carbon, from which composition activated carbon having a high specific surface area and a high mesopore volume can be obtained by carbonization and activation and which composition has excellent moldability, a method for producing the composition for producing activated carbon, a molded product for producing activated carbon in which molded product the composition for producing activated carbon is used, a method for producing the molded product for producing activated carbon, fiber for producing activated carbon fiber, a method for producing the fiber for producing activated carbon fiber, an activated carbon precursor, a carbide of the activated carbon precursor, an activated carbon fiber precursor, carbon fiber, activated carbon, a method for producing the activated carbon, activated carbon fiber, and a method for producing the activated carbon fiber.

## Claims

1. A composition for producing activated carbon, comprising a phenol resin and lignin having a softening point of 100°C to 175°C.

2. The composition for producing activated carbon as set forth in claim 1, wherein the lignin has an ash content of 0.1% by mass to 2.0% by mass.

3. The composition for producing activated carbon as set forth in claim 1 or 2, wherein the phenol resin is a novolac-type phenol resin.

4. The composition for producing activated carbon as set forth in any one of claims 1 to 3, wherein a ratio of the lignin to a total mass of the lignin and the phenol resin is 5% by mass to 90% by mass.

5. A method for producing a composition for producing activated carbon recited in any one of claims 1 to 4, comprising melt mixing the lignin and the phenol resin at 160°C to 200°C.

6. A molded product for producing activated carbon, comprising a composition for producing activated carbon recited in any one of claims 1 to 4.

7. A method for producing a molded product for producing activated carbon recited in claim 6, comprising
melt mixing the lignin and the phenol resin at 160°C to 200°C, and molding a resulting mixture.

8. Fiber for producing activated carbon fiber, comprising a composition for producing activated carbon recited in any one of claims 1 to 4.

9. A method for producing fiber for producing activated carbon fiber recited in claim 8, comprising
melt spinning the lignin and the phenol resin at 160°C to 200°C.

10. An activated carbon precursor comprising a cured product of a composition for producing activated carbon recited in any one of claims 1 to 4.

11. The activated carbon precursor as set forth in claim 10, wherein the activated carbon precursor is a molded product.

12. An activated carbon fiber precursor comprising a cured product of a composition for producing activated carbon recited in any one of claims 1 to 4.

13. A carbide obtained by carbonizing an activated carbon precursor recited in claim 10 or 11.

14. Carbon fiber obtained by carbonizing an activated carbon fiber precursor recited in claim 12.

15. Activated carbon obtained by activating a carbide recited in claim 13.

16. A method for producing activated carbon, comprising curing a composition for producing activated carbon recited in any one of claims 1 to 4, carbonizing a resulting cured product, and activating a resulting carbide.

17. A method for producing activated carbon, comprising curing a molded product for producing activated carbon recited in claim 6, carbonizing a resulting cured product, and activating a resulting carbide.

18. Activated carbon fiber obtained by activating carbon fiber recited in claim 14.

19. A method for producing activated carbon fiber, comprising curing fiber for producing activated carbon fiber recited in claim 8, carbonizing a resulting cured product, and activating resulting carbon fiber.
